# EUROPEAN PATENT SPECIFICATION

(11) **EP 2 074 880 B1**
(45) Date of publication and mention of the grant of the patent: **29.02.2012**
(21) Application number: 08171836.3
(22) Date of filing: 16.12.2008
(51) Int. Cl.: A01D 41/12, A01F 12/46

(54) **Grain delivery conveyor**
Kornförderband
Convoyeur de grain

(30) Priority: 17.12.2007 US 2506
(43) Date of publication of application: 01.07.2009
(73) Proprietor: CNH Belgium N.V., 8210 Zedelgem (BE)
(72) Inventor: Cooksey, William L., Geneseo, IL 61254 (US); Coppinger, Jason R., Davenport, IA 52803 (US)
(74) Representative: CNH IP Department

(56) References cited:
- DE-A1- 3 827 277
- DE-A1- 4 419 435
- FR-A- 2 235 853
- GB-A- 2 073 569
- US-A- 4 008 819

## Description

This invention relates generally to a grain delivery conveyor comprising pivoting conveyor housing and a mechanism for holding the conveyor in fixed positions including a deployed or raised position extending upwardly, and in a lowered or stored position, the mechanism being easily configurable differently for holding the conveyor in the respective positions. The invention also relates to a agricultural harvesting machine comprising such a grain delivery conveyor and a method for lowering or raising such a grain delivery conveyor.

Grain tanks of harvesting machines such as combines and the like are commonly located on the upper regions of the machine. The grain tank will commonly have in it a grain delivery conveyor, usually an auger type, oriented so as to extend upwardly to an outlet through which the grain conveyed by the conveyor is discharged into the tank. It is typically desirable for the outlet of the conveyor to be positionable at a relatively high elevation relative to the grain in the tank, such that the conveyor is not deeply buried in the grain in the tank, requiring it to force new grain into the tank against the weight of the existing grain above the conveyor outlet. To achieve this capability, some delivery conveyors are pivotable upwardly and downwardly and essentially ride or float on the grain in the tank, and some are fixed at a selected height. It is now common to employ upwardly extending grain tank extensions around the periphery of the tank to increase its height and thus capacity, and it is desirable for the grain delivery conveyor to extend to this additional height to provide satisfactory grain delivery.

However, some grain tank extensions make the overall height of the harvesting machine too great to allow the machine to be moved through doorways, or carried on a trailer over public roads. As a result, the extensions are variously removable, foldable or otherwise collapsible to a reduced height to accommodate this. If the grain delivery conveyor is fixed so as to extend to a height above the reduced height of the extensions, then the height of the conveyor must also be reduced. As an additional concern, if the conveyor is lowered, and is not secured in position, and thus is movable in some manner, it is foreseen that travel by the machine over rough surfaces could generate movements of the conveyor, such as bouncing movements, that could cause damage the conveyor, and/or adjacent apparatus.

It thus is an object of the invention to provide a conveyor and/or apparatus for supporting a conveyor, that provides the ability to easily and conveniently lower and raise the conveyor, and secure or hold it in both the lowered and raised positions, for instance, when lowered, to prevent the conveyor from bouncing when traveling over rough roads or fields, and possibly damaging adjacent apparatus or the conveyor itself.

FR-A- 2 233 853 shows a mechanism for moving the unloading tube of a combine harvester between storage and an operative positions by means of a hydraulic cylinder. The mechanism comprises two latching pins, one for each extreme position of the tube. Extension or retraction of the cylinder first unlocks the one latching pin and moves the other latching pin into its locking hole.

According to a first aspect of the invention there is provided an agricultural harvesting machine comprising:
a grain tank;
a grain delivery conveyor supported and held within the grain tank, the conveyor comprising a tubular conveyor housing having a first end portion and an opposite second end portion, the first end portion being pivotally connected to a frame by a pivot joint for pivotal movement of the conveyor housing about a pivotal axis relative to the frame, between a predetermined first position and a predetermined second position angularly related to the first position; and
a pivoting holding mechanism connected between the conveyor housing and the frame, the pivoting holding mechanism comprising a first link and a second link,
characterised in that:
the first link has a first end portion pivotally connected to the frame at a first pivotal connection and the second link has a first end portion pivotally connected to the conveyor housing at a second pivotal connection, the first link and the second link being pivotally connected at a third pivotal connection, and the first end portion of the tubular conveyor housing including a stop disposed at a predetermined location,
the pivoting holding mechanism being configured such that as the tubular conveyor housing is in the first position, the first link and the second link will be in a generally aligned relationship between the first pivotal connection and the second pivotal connection with one of the links contacting the stop for holding the tubular conveyor housing in the first position, and when the tubular conveyor housing is held in the first position, the second link can be pivoted out of the aligned relationship with the first link to release the tubular conveyor housing for pivoting to the second position,
the pivoting holding mechanism further being configured such that as the tubular housing is in the second position, the first link and the second link will pivot into overlapping relation for holding the tubular conveyor housing in the second position, and when the tubular conveyor housing is held in the second position, the second link can be pivoted out of engagement with the first link to release the conveyor housing for pivoting to the first position.

Preferably the predetermined first position is a predetermined lowered position and the predetermined second position is a predetermined raised position.

This provides the ability to easily and conveniently lower and raise the conveyor, and secure or hold it in both the lowered and raised positions, for instance, when lowered, to prevent the conveyor from bouncing when traveling over rough roads or fields, and possibly damaging adjacent apparatus or the conveyor itself.

According to another preferred aspect of the invention, the mechanism comprises a handle, preferably on or in connection with the second link and conveniently located, which handle can be grasped by a person using only one hand, for easily pivoting the holding mechanism between its different configurations for holding the conveyor in its different positions, and easily releasing the mechanism and conveyor for movement to the other position.

Preferably the agricultural harvesting machine according to the invention comprises a grain tank which comprises a lower region and an upper region in which the lowered position of the tubular conveyor housing is a stored position within the grain tank and the predetermined raised position of the tubular conveyor housing is a deployed position within the grain tank. As a result, in the lowered position the conveyor height is sufficiently low so as to provide adequate height clearance for transport and passage through doorways of buildings and under bridges, and in the raised position, the conveyor is of adequate height for depositing grain onto existing grain in the upper region of the tank, including when grain tank extensions are used to increase the grain capacity of the tank.

According to a second aspect of the invention, there is provided a method for lowering or raising a grain delivery conveyor in an agricultural harvesting machine according to the first aspect of the invention from the respective predetermined raised or lowered position, characterised in that it comprises the steps of
pivoting the second link in a first pivotal direction out of engagement with the first link to release the tubular conveyor housing out of the raised position, and
pivoting the conveyor housing downwardly to a predetermined lowered position in which the holding mechanism will automatically pivot in the first pivotal direction into contact with the stop to hold the conveyor in this lowered position; or
pivoting the second link in a second pivotal direction, opposite to the first pivotal direction,to release the the tubular conveyor housing out of the lowered position, and
pivoting the conveyor housing upwardiy to a predetermined raised position in which the holding mechanism will automatically pivot in the second pivotal direction into overlapping relation with the first link to hold the conveyor in this raised position.

Several embodiments of the present invention will now be described in further detail, by way of example only, with reference to the accompanying drawings, in which:
Figure 1 is a simplified schematic rear view of a representative agricultural harvesting machine, including a grain delivery conveyor and holding mechanism according to the invention disposed in a grain tank of the machine for delivering grain thereto;
Figure 2 is a fragmentary perspective view of the conveyor, mechanism and grain tank of Figure 1, showing the conveyor held in a raised deployed position by the mechanism;
Figure 3 is another fragmentary perspective view of the conveyor, mechanism and grain tank, showing the conveyor held by the mechanism in a lowered stored position;
Figure 3a is a fragmentary end view of the conveyor and mechanism;
Figure 4 is a simplified schematic representation of the conveyor in the raised position and the configuration of the mechanism for holding the conveyor in that position, and including an arrow illustrating a pivotal movement of a link of the mechanism for releasing the conveyor;
Figure 5 is another simplified schematic representation of the conveyor and mechanism, showing the conveyor at an intermediate position between the raised and lowered positions, and showing the mechanism transitionally pivoting toward a second configuration for holding the conveyor in the lowered position; and
Figure 6 is another simplified schematic representation of the conveyor and mechanism, showing the conveyor in the lowered position, and the mechanism configured for holding it in that position.

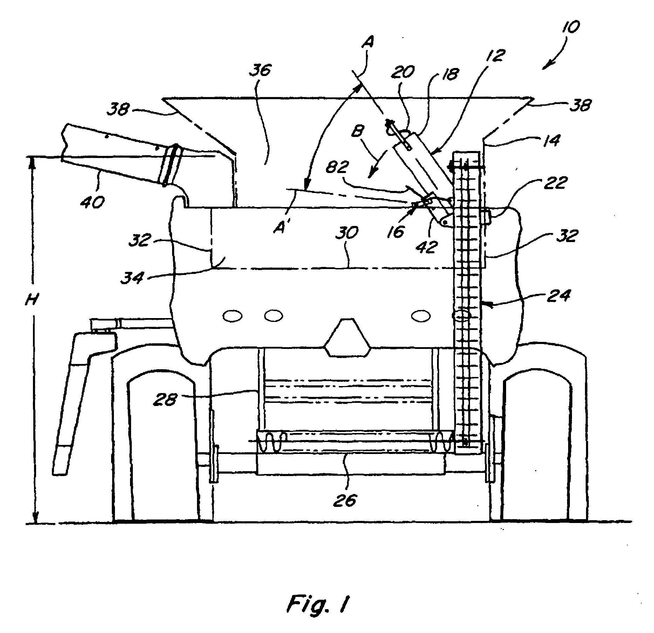

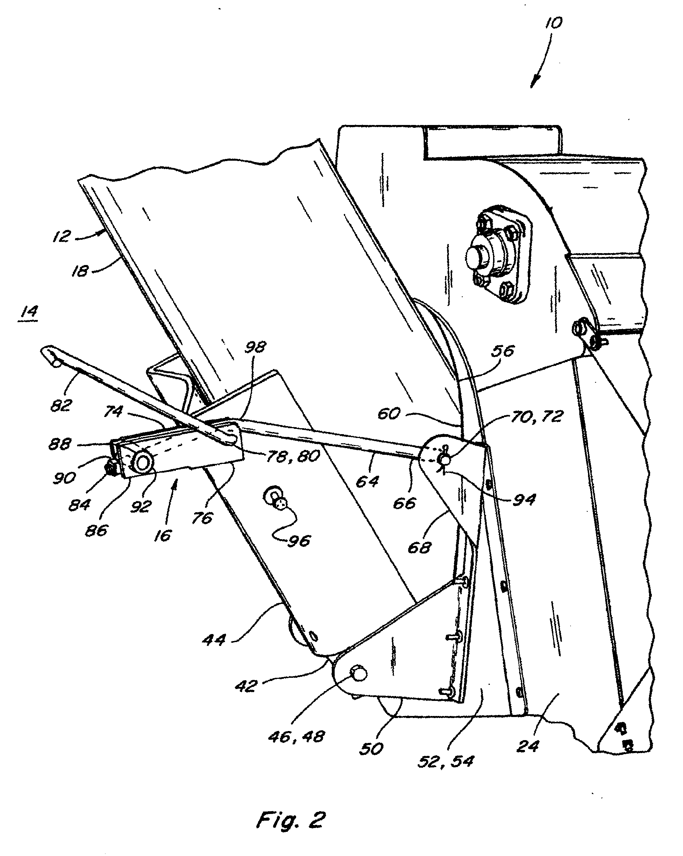

Referring now the drawings, in Figures 1 and 2, a representative agricultural harvesting machine 10 is shown, including a grain delivery conveyor 12 supported and held in a raised deployed position within a grain tank 14 of machine 10, by a holding mechanism 16 constructed and operable according to the present invention. Grain delivery conveyor 12 is of conventional construction including an elongate, open ended tubular conveyor housing 18 containing a helical auger 20, connected in driven relation to a rotary drive 22 conventionally powered and operable for rotating auger 20 within housing 18 about a central rotational axis A in a direction for conveying grain (not shown) upwardly through housing 18, and discharging the grain into the interior of tank 14, in the well-known manner, as generally denoted by arrow B. The grain is received from a conventionally constructed and operable clean grain elevator 24 disposed beside grain tank 14 and operable for conveying grain upwardly to conveyor 12 from a cross conveyor 26, which receives the clean grain from a cleaning system 28 of machine 10, also in the well-known manner.

Grain tank 14 is comprised of a floor 30 and surrounding walls 32 which form an upwardly open cavity having a lower region 34 and an upper region 36. As illustrated in Figure 1, a grain tank, such as tank 14, can include grain tank extensions 38 extending upwardly from a walls 32, either at an outwardly extending angle as shown, or straight up (not shown), which extensions can be permanent, or removable or collapsible, such as by folding (not shown), as is well known. This is advantageous as it lowers the overall height of machine 10, to facilitate transport over public roads, under overhead utility lines, bridges, and the like, and so as to allow passage through doorways of storage and service facilities. Generally, with the grain tank extensions, such as extensions 38, removed or collapsed or folded, harvesting machine 10 will have an overall height, about as denoted by arrow H. The advantage of grain tank extensions 38 when used, is that they significantly increase the grain holding capacity of grain tank 14. However, this also increases the possible elevation that grain carried in tank 14 will reach, and, as a result, it is desirable for grain delivery conveyor 12 to extend to a sufficient height within tank 14 for discharging grain onto or into existing grain in the tank, without problems. More particularly in this regard, it is contemplated that the open upper end of conveyor 12 may be fully or partially immersed in grain as it is operating, to such an extent that the grain discharged by the conveyor will be required to be forced into existing grain in the tank, and it is desirable that conveyor 12 have sufficient height to minimize such force, so as to avoid problems such as grinding, cracking, bruising or otherwise damaging the grain.

Here, the height and angular orientation of conveyor 12 within tank 14 illustrated in Figure 1 is sufficient such that grain discharged from the conveyor into tank 14 when full or nearly full, will substantially bubble from the conveyor and intermix with the existing grain without damaging the grain. Thus, it has been found to be desirable to have the capability for securely holding conveyor 12 in this position, with the open lower end of the conveyor in mating or covering relation with an opening of an upper end of elevator 24 for receiving grain therefrom. When grain tank 14 becomes full, or it is otherwise desired to unload the tank, it will typically be unloaded using an unloading conveyor 40. This can be done either while machine 10 is operating and conveyor 12 is discharging grain into tank 14, or while machine 10 is idle.

As noted above, at some times when machine 10 is to be transported over public roads, under utility lines, bridges and the like, or is to be serviced or stored in a building, it will be desired or required to remove or collapse extensions 38, to reduce the overall height of machine 10 to about height H. Additionally, because it is evident that conveyor 12 extends upwardly beyond height H, it will also be desired or required to reduce the height of conveyor 12. Thus, it is sought to have a capability to collapse, fold or move conveyor 12 to a lower position, generally equal to or below height H.

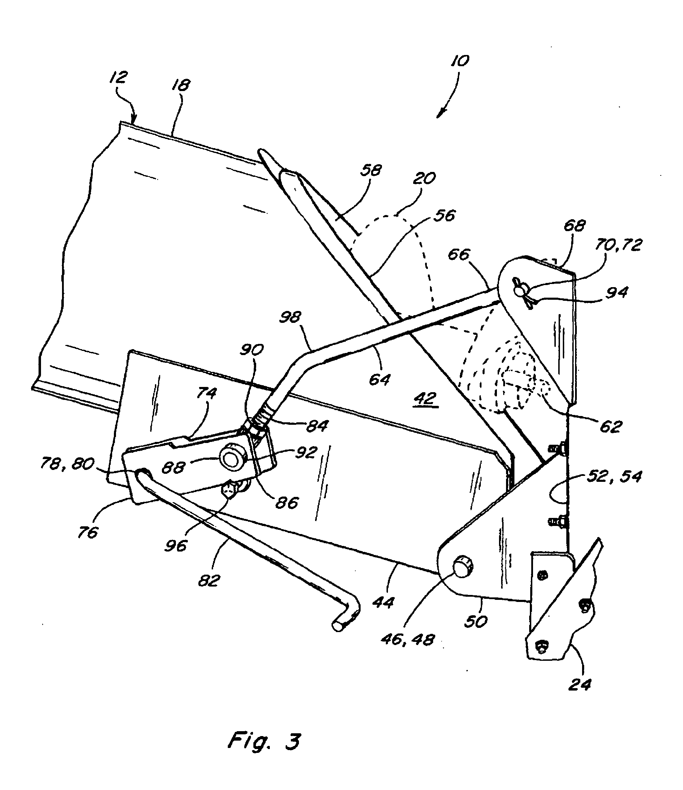

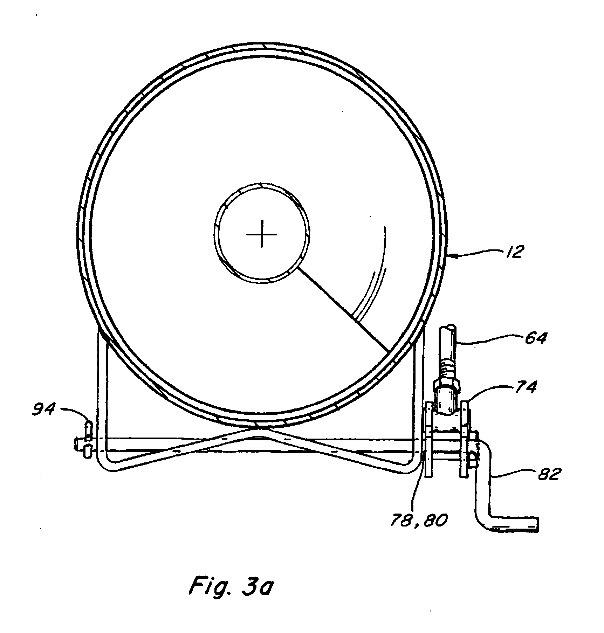

Referring also to Figures 3, 4, 5 and 6, holding mechanism 16 of the invention is easily configurable for securely yet releasably holding conveyor 12 in the raised deployed position illustrated in Figures 1 and 2, and is alternatively configurable for releasably holding conveyor 12 in a lowered stored position, as depicted by the position of axis A' in Figure 1, and as also illustrated in Figure 3. Advantageously, holding mechanism 16 is adapted so as to be easily and conveniently configured in the respective holding configurations, as conveyor 12 is moved into the respective raised and lowered positions.

Here, a lower first end portion 42 of conveyor 12 or conveyor housing 18 includes a bracket 44 welded, fastened or otherwise suitably fixedly connected thereto. Bracket 44 is pivotally connected by a pivot joint 46 comprising a pivot pin 48, to a support bracket 50, fixedly mounted on a suitable structure or frame on or beside an adjacent side of grain tank 14, here, such structure or frame comprising an upper end portion 52 of a housing 54 of clean grain elevator 24. Bracket 50 can be attached to upper end portion 52 in a suitable manner also, such as by welding, fasteners, or the like. To facilitate operation, first end portion 42 of conveyor housing 18 preferably has an angled, circumferential edge portion 56 defining a lower or inlet opening 58 of conveyor 12, that is shaped to matingly engage or cover an edge portion 60 of upper end portion 52 of housing 54 of elevator 24, extending around a discharge outlet (not shown) of that conveyor, when conveyor 12 is in the raised deployed position shown in Figures 1 and 2, to provide a continuous, enclosed path for the transfer of grain from elevator 24, to conveyor 12. At the same time that conveyor housing 18 is mated with housing 54 of elevator 24, a drive coupler 62 of auger 20 of conveyor 12 is automatically connected in rotatably driven relation to an auger drive (not shown) in the well known manner.

Holding mechanism 16 of the invention includes an elongate first link 64, having a first end portion 66 pivotally connected to a bracket 68 on housing 54, by a first pivotal connection 70 comprising a pivot pin 72. Mechanism 16 includes a second link 74, having a first end portion 76 pivotally connected to bracket 44 on conveyor 12, by a second pivotal connection 78 comprising a first end portion 80 of a handle 82 of mechanism 16. First end portion 80 of handle 82 is fixedly connected to second link 74 at a predetermined angle, but additionally extends through and is pivotally movable relative to bracket 44, to allow joint pivotal movement of handle 82 and link 74 relative thereto. First link 64 has a second end portion 84 and second link 74 has a second end portion 86, which are pivotally connected together by a third pivotal connection 88. Here, second end portion 84 of first link 64 comprises a threaded rod end, second end portion 86 of second link 74 comprises a clevis, and pivotal connection 88 comprises a nut 90 that threadedly engages end portion 84, and a pin 92 that extends through the clevis, allowing relative pivotal movement between the rod end and the clevis. First and second pivotal connections 70 and 78 additionally include retainer pins 94. Bracket 44 includes a stop 96, which preferably extends sidewardly at a predetermined location along a path of pivotal movement of second link 74, which stop 96 can comprise a bolt mounted to the bracket with nuts, or the like. First link 64 includes a bend 98 at a predetermined location along the length thereof so as to overlap second pivotal connection 78, when conveyor 12 is in the raised position as shown in Figures 1 and 2.

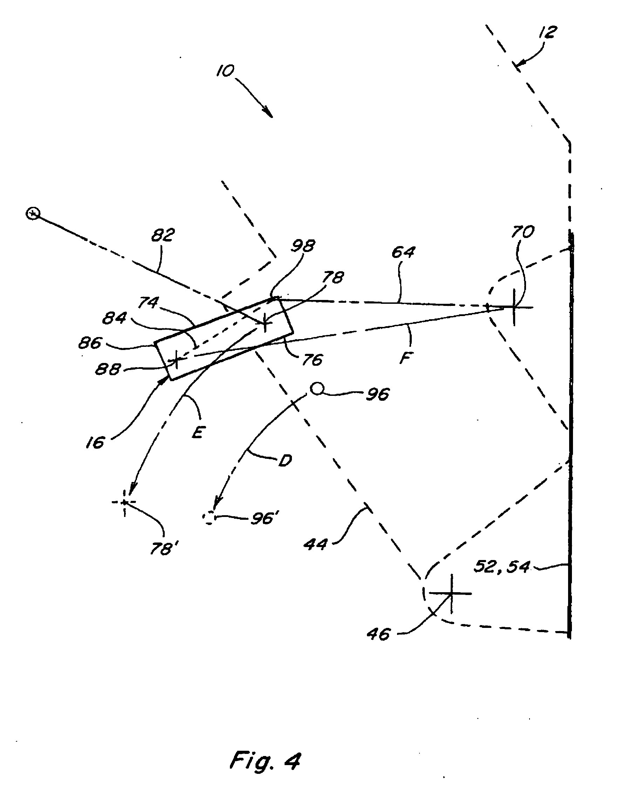

Referring more particularly to Figures 1, 2 and 4, with conveyor 12 positioned at its raised deployed position, first link 64 of holding mechanism will extend in overlapping relation to second link 74, to hold the conveyor in this position. More particularly, because of the location of the center of gravity of conveyor 12, and the location of the pivotal connection of conveyor 12 to bracket 50 at pivot joint 46, the weight of conveyor 12 and mechanism 16 acts to urge conveyor 12 to pivot in the counterclockwise direction about pivot joint 46, as denoted by arrow D in Figure 4. Since second pivotal connection 78 is mounted to bracket 44 on conveyor 12, it is also urged in the counterclockwise direction, as denoted by arrow E. Because second link 74 is connected to the conveyor at pivotal connection 78, and is oriented as shown, and is connected to first link 64 at third pivotal connection 88 as also shown, the weights of conveyor 12 and mechanism 16 place second link in compression, and first link 64 in tension. Because of the shape of link 64, that is, it includes bend 98 curves downwardly about pivotal connection 78, the tensile load thereon is directed along a straight line F extending between first pivotal connection 70, and third pivotal connection 88, and below pivotal connection 78. As a result, link 64 is urged downwardly toward pivotal connection 78, by the weights. This effectively holds conveyor 12 against upper end portion 52 of housing 54, even when subjected to normal vibrations, and when harvesting machine 10 is tilted in any direction, as a result, for instance, of being located on an incline such as a hillside or the like.

When it is desired or required to release conveyor 12 from the raised deployed position, second link 74 is pivoted upwardly in the clockwise direction about second pivotal connection 78. This can be simply and easily done manually by grasping handle 82 and moving it clockwise.

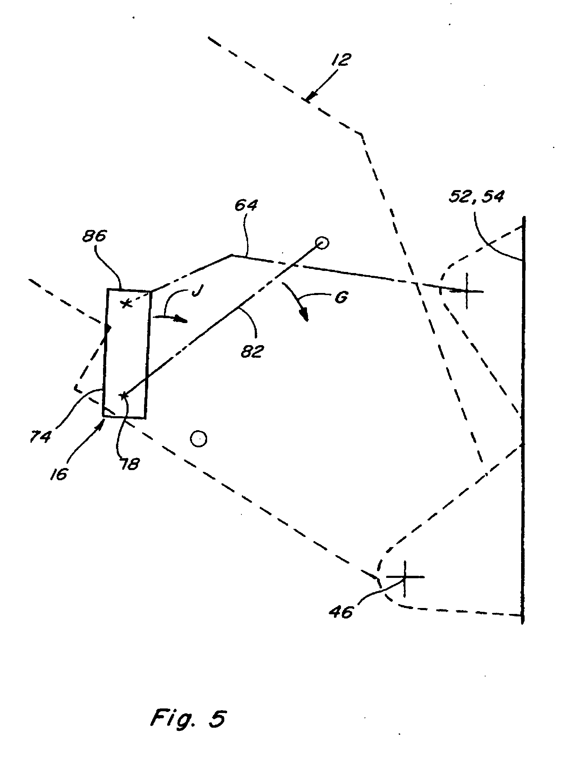

Referring also to Figure 5, as handle 82 is pivoted further in the clockwise direction, as denoted by arrow G, second end portion 86 of second link 74 is further pivoted upwardly relative to second pivotal connection 78, as denoted by arrow J, which allows conveyor 12 to pivot counterclockwise downwardly about pivot joint 46, away from upper end portion 52 of housing 54, as illustrated. During this movement, first link 64 will be freely pivotable about first pivotal connection 70, and conveyor 12 can be manually supported.

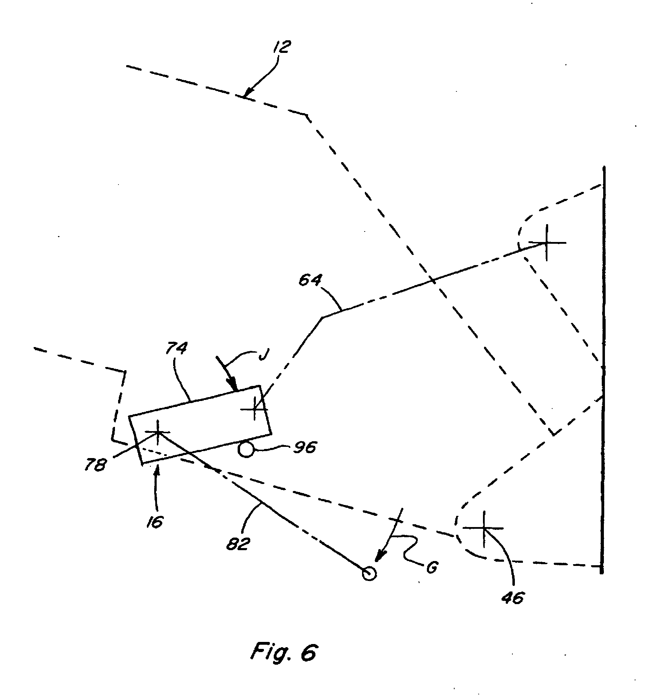

Referring also to Figure 6, as handle 82 is moved further in the clockwise direction, as denoted by arrow G, second link 74 will be pivoted further in that direction, as denoted by arrow J. If desired, this movement can continue until link 74 comes to rest against stop 96. Conveyor 12 will now be in the lowered stored position as represented by the position and orientation of axis A' as shown in Figure 1. Second pivotal connection 78 will be repositioned as denoted at 78' in Figure 4, and stop 96 will be repositioned as denoted at 96' in Figure 4. Additionally, first link 64 will be positioned generally in alignment with second link 74, so as to hold mechanism 16 and conveyor 12 in this position. So held, conveyor 12 will not be able to move, particularly, to bounce, and will thus not pose a risk of damaging adjacent apparatus. Then, when it is desired to move conveyor 12, handle 82 is simply and conveniently movable upwardly in the direction opposite direction J, to release the mechanism and the conveyor. This will move first link 64 and second link 74 out of alignment, to allow the mechanism and the conveyor to be freely pivoted.

Here, it should be noted that although mechanism 16 is illustrated and described as being manually operable, alternatively, it should be noted that, as an alternative, it could be powered, for instance by a suitable servo controller, as desired or required for a particular application. Additionally, it should be noted that although second link 74 is illustrated as being of a clevis or bifurcated construction so as to be capable of receiving first link 64 in overlapping or overlaying relation therewith, alternatively other designs that allow interlocking or overlapping of the links for holding the conveyor in the raised deployed position could be used.

Still further, referring to Figures 1 and 2, in the preferred embodiment of holding mechanism 16 shown, when conveyor 12 is in the raised position, handle 82 is positioned as shown, extending upwardly so as to be easily grasped with one hand as the other hand is used to support conveyor 12. The user or operator is preferably located in tank 14 to perform this operation. Conveyor 12 can then be released by pivoting handle 82 in the clockwise direction to release the conveyor, to allow it to be manually lowered. During the lowering of the conveyor, handle 82 of mechanism 16 can continue to be held, and will automatically pivot into the configuration shown in Figure 3, with only minimal manual assistance, for holding the conveyor in the lowered position. Then, when it is desired to release the conveyor from the lowered position, handle 82 can be grasped with one hand and lifted to release the conveyor, and the conveyor can be pivoted to the raised position. Again, the handle can be held as the conveyor is pivoted, and some manual effort may be used to position the handle as shown in Figure 3. Additionally, it should be noted that stop 96 can be positioned as desired or required for a particular application, for holding the mechanism. For instance, the stop could alternatively be positioned in the path of the first link for cooperating with the holding mechanism for holding the conveyor in the lowered position. Still further, although in the embodiment illustrated only the first link is shown as being adjustable, either the first or the second link, or both links, could be adjustable.

It will be understood that changes in the details, materials, steps, and arrangements of parts which have been described and illustrated to explain the invention will occur to and may be made by those skilled in the art upon a reading of this disclosure within the scope of the invention as defined by the claims.

## Claims

1. An agricultural harvesting machine comprising:
a grain tank (14);
a grain delivery conveyor (12) supported and held within the grain tank (14), the conveyor comprising a tubular conveyor housing (18) having a first end portion (42) and an opposite second end portion, the first end portion (42) being pivotally connected to a frame (50, 52, 68) by a pivot joint (46) for pivotal movement of the conveyor housing about a pivotal axis relative to the frame (50, 52, 68), between a predetermined first position and a predetermined second position angularly related to the first position; and
a pivoting holding mechanism (16) connected between the conveyor housing and the frame (50, 52, 68), the pivoting holding mechanism (16) comprising a first link (64) and a second link (74),
**characterised in that**:
the first link (64) has a first end portion (66) pivotally connected to the frame (50, 52, 68) at a first pivotal connection (70) and the second link has a first end portion (76) pivotally connected to the conveyor housing (18) at a second pivotal connection (78),
the first link (64) and the second link (74) being pivotally connected at a third pivotal connection (88), and the first end portion (42) of the tubular conveyor housing (18) including a stop (96) disposed at a predetermined location,
the pivoting holding mechanism being configured such that as the tubular conveyor housing (18) is in the first position, the first link (64) and the second link (74) will be in a generally aligned relationship between the first pivotal connection (70) and the second pivotal connection (78) with one of the links (64, 74) contacting the stop (96) for holding the tubular conveyor housing (18) in the first position, and when the tubular conveyor housing (18) is held in the first position, the second link (74) can be pivoted out of the aligned relationship with the first link (64) to release the tubular conveyor housing (18) for pivoting to the second position,
the pivoting holding mechanism further being configured such that as the tubular housing (18) is in the second position, the first link (64) and the second link (74) will pivot into overlapping relation for holding the tubular conveyor housing (18) in the second position, and when the tubular conveyor housing (18) is held in the second position, the second link (74) can be pivoted out of engagement with the first link (64) to release the conveyor housing for pivoting to the first position.

2. An agricultural harvesting machine according to claim 1, **characterised in that** the predetermined first position is a predetermined lowered position and the predetermined second position is a predetermined raised position.

3. An agricultural harvesting machine according to any of the preceding claims, **characterised in that** the first end portion (42) of the tubular conveyor housing (18) is the inlet end portion and that the opposite second end portion of the conveyor housing is the discharge end portion.

4. An agricultural harvesting machine according to any of the preceding claims, **characterised in that** the tubular conveyor housing (18) contains a helical auger (20).

5. An agricultural harvesting machine according to any of the preceding claims, **characterised in that** the second link (74) comprises a handle (82) fixedly mounted thereto.

6. An agricultural harvesting machine according to any of the preceding claims, **characterised in that** at least one of the links (64, 74) has an adjustable length.

7. An agricultural harvesting machine according to any of the preceding claims, **characterised in that** the third pivotal connection (88) comprises a clevis and a clevis pin (92).

8. An agricultural harvesting machine according to any of the preceding claims, **characterised in that** the first link (64) comprises a bend (98) that curves over a portion of the second link (74) when the links are in overlapping relation.

9. An agricultural harvesting machine according to any of the preceding claims, **characterised in that** the grain tank (14) comprises a lower region (34) and an upper region (36).

10. An agricultural harvesting machine according to any of the preceding claims, **characterised in that** the predetermined first position of the tubular conveyor housing (18) is a stored position within the grain tank (14) and the predetermined second position of the tubular conveyor housing (18) is a deployed position within the grain tank (14).

11. A method for lowering and raising a grain delivery conveyor (12) in an agricultural harvesting machine according to any of the preceding claims from the respective predetermined raised and lowered position, **characterised in that** it comprises the steps of
pivoting the second link (74) in a first pivotal direction out of engagement with the first link (64) to release the tubular conveyor housing (18) out of the raised position, and pivoting the conveyor housing (18) downwardly to a predetermined lowered position in which the holding mechanism (16) will automatically pivot in the first pivotal direction into contact with the stop (96) to hold the conveyor in this lowered position; and
pivoting the second link (74) in a second pivotal direction, opposite to the first pivotal direction, to release the tubular conveyor housing (18) out of the lowered position, and pivoting the conveyor housing (18) upwardly to a predetermined raised position in which the holding mechanism (16) will automatically pivot in the second pivotal direction into overlapping relation with the first link (64) to hold the conveyor in this raised position.

## Patentansprüche

1. Landwirtschaftliche Erntemaschine mit:
einem Körnertank (14);
einem Körner-Übergabe-Förderer (12), der innerhalb des Körnertanks (14) gehaltert und gehalten ist, wobei der Förderer ein rohrförmiges Förderer-Gehäuse (18) mit einem ersten Endteil (42) und einem entgegengesetzten zweiten Endteil aufweist, wobei der erste Endteil (42) schwenkbar mit einem Rahmen (50, 52, 68) über ein Schwenkgelenk (46) für eine Schwenkbewegung des Förderer-Gehäuses um eine Schwenkachse gegenüber dem Rahmen (50, 52, 68) zwischen einer vorgegebenen ersten Stellung und einer vorgegebenen zweiten Stellung verbunden ist, die in einer Winkelbeziehung zu der ersten Stellung steht; und
einem schwenkbaren Haltemechanismus (16), der zwischen dem Förderer-Gehäuse und dem Rahmen (50, 52, 68) angeschlossen ist, wobei der schwenkbare Haltemechanismus (16) ein erstes Gestänge (64) und ein zweites Gestänge (74) umfasst,
**dadurch gekennzeichnet, dass**:
das erste Gestänge (64) einen ersten Endteil (66) aufweist, der schwenkbar mit dem Rahmen (50, 52, 68) an einer ersten Schwenkverbindung (70) verbunden ist, und das zweite Gestänge einen schwenkbar mit dem Förderer-Gehäuse (18) an einer zweiten Schwenkverbindung (78) verbundenen ersten Endteil (76) aufweist,
wobei das erste Gestänge (64) und das zweite Gestänge (74) schwenkbar an einer dritten Schwenkverbindung (88) verbunden sind und der erste Endteil (42) des rohrförmigen Förderer-Gehäuses (18) einen Anschlag (96) einschließt, der an einer vorgegebenen Stelle angeordnet ist,
wobei der schwenkbare Haltemechanismus so konfiguriert ist, dass wenn sich das rohrförmige Förderer-Gehäuse (18) in der ersten Stellung befindet, das erste Gestänge (64) und das zweite Gestänge (74) sich in einer allgemein ausgerichteten Beziehung zwischen der ersten Schwenkverbindung (70) und der zweiten Schwenkverbindung (78) befinden, wobei eines der Gestänge (64, 74) mit dem Anschlag (96) in Kontakt steht, um das rohrförmige Förderer-Gehäuse (18) in der ersten Position zu halten, während, wenn das rohrförmige Förderer-Gehäuse (18) in der ersten Stellung gehalten wird, das zweite Gestänge (74) aus der ausgerichteten Beziehung mit dem ersten Gestänge (64) verschwenkt werden kann, um das rohrförmige Förderer-Gehäuse (18) für ein Verschwenken auf die zweite Stellung freizugeben,
wobei der schwenkbare Haltemechanismus weiterhin derart konfiguriert ist, dass wenn sich das rohrförmige Gehäuse (18) in der zweiten Stellung befindet, das erste Gestänge (64) und das zweite Gestänge (74) in eine überlappende Beziehung verschwenken, um das rohrförmige Förderer-Gehäuse (18) in der zweiten Stellung zu halten, und wenn das rohrförmige Förderer-Gehäuse (18) in der zweiten Stellung gehalten wird, das zweite Gestänge (74) aus einem Eingriff mit dem ersten Gestänge (64) heraus verschwenkt werden kann, um das Förderer-Gehäuse für ein Verschwenken auf die erste Stellung freizugeben.

2. Landwirtschaftliche Erntemaschine nach Anspruch 1, **dadurch gekennzeichnet, dass** die vorgegebene erste Stellung eine vorgegebene abgesenkte Position ist, und die vorgegebene zweite Stellung eine vorgegebene angehobene Stellung ist.

3. Landwirtschaftliche Erntemaschine nach einem der vorhergehenden Ansprüche, **dadurch gekennzeichnet, dass** der erste Endteil (42) des rohrförmigen Förderer-Gehäuses (18) der Einlass-Endteil ist, und dass der entgegengesetzte zweite Endteil des Förderer-Gehäuses der Auswurf-Endteil ist.

4. Landwirtschaftliche Erntemaschine nach einem der vorhergehenden Ansprüche, **dadurch gekennzeichnet, dass** das rohrförmige Förderer-Gehäuse (18) eine schraubenlinienförmige Förderschnecke (20) enthält.

5. Landwirtschaftliche Erntemaschine nach einem der vorhergehenden Ansprüche, **dadurch gekennzeichnet, dass** das zweite Gestänge (74) einen Handgriff (82) umfasst, der fest an diesem befestigt ist.

6. Landwirtschaftliche Erntemaschine nach einem der vorhergehenden Ansprüche, **dadurch gekennzeichnet, dass** zumindest eines der Gestänge (64, 74) eine einstellbare Länge aufweist.

7. Landwirtschaftliche Erntemaschine nach einem der vorhergehenden Ansprüche, **dadurch gekennzeichnet, dass** die dritte Schwenkverbindung (88) einen Schäkel und einen Schäkel-Bolzen (92) umfasst.

8. Landwirtschaftliche Erntemaschine nach einem der vorhergehenden Ansprüche, **dadurch gekennzeichnet, dass** das erste Gestänge (64) eine Biegung (98) aufweist, die über einem Teil des zweiten Gestänges (74) gekrümmt ist, wenn die Gestänge sich in einer überlappenden Beziehung befinden.

9. Landwirtschaftliche Erntemaschine nach einem der vorhergehenden Ansprüche, **dadurch gekennzeichnet, dass** der Körnertank (14) einen unteren Bereich (34) und einen oberen Bereich (36) umfasst.

10. Landwirtschaftliche Erntemaschine nach einem der vorhergehenden Ansprüche, **dadurch gekennzeichnet, dass** die vorgegebene erste Stellung des rohrförmigen Förderer-Gehäuses (18) eine verstaute Position innerhalb des Körnertanks (14) ist und die vorgegebene zweite Stellung des rohrförmigen Förderer-Gehäuses (18) eine Betriebsstellung innerhalb des Körnertanks (14) ist.

11. Verfahren zum Absenken und Anheben eines Körner-Übergabe-Förderers (12) in einer landwirtschaftlichen Erntemaschine nach einem der vorhergehenden Ansprüche von der jeweiligen vorgegebenen angehobenen und abgesenkten Stellung, **dadurch gekennzeichnet, dass** es die folgenden Schritte umfasst:
Verschwenken des zweiten Gestänges (74) in einer ersten Schwenkrichtung außer Eingriff mit dem ersten Gestänge (64) zur Freigabe des rohrförmigen Förderer-Gehäuses (18) aus der angehobenen Stellung heraus und zum Verschwenken des Förderer-Gehäuses (18) nach unten auf eine vorgegebene abgesenkte Stellung, in der der Haltemechanismus (16) automatisch die erste Schwenkverbindung in Kontakt mit dem Anschlag (96) verschwenkt, um den Förderer in dieser abgesenkten Stellung zu halten; und
Verschwenken des zweiten Gestänges (74) in einer zweiten Schwenkrichtung entgegengesetzt zu der ersten Schwenkrichtung zur Freigabe des rohrförmigen Förderer-Gehäuses (18) aus der abgesenkten Position heraus und zum Verschwenken des Förderer-Gehäuse (18) nach oben auf eine vorgegebene angehobene Stellung, in der der Haltemechanismus (16) automatisch in der zweiten Schwenkrichtung in eine überlappende Beziehung mit dem ersten Gestänge (64) verschwenkt, um den Förderer in dieser angehobenen Stellung zu halten.

## Revendications

1. Machine de récolte agricole comprenant :
un réservoir à grains (14),
un convoyeur d'alimentation de grains (12) supporté et maintenu à l'intérieur du réservoir à grains (14), le convoyeur comprenant un caisson tubulaire de convoyeur (18) comportant une première partie terminale (42) et une seconde partie terminale opposée, la première partie terminale (42) étant couplée de façon pivotante à un châssis (50, 52, 68) par une articulation pivotante (46) pour permettre un mouvement pivotant du caisson du convoyeur autour d'un axe de pivot par rapport au châssis (50, 52, 68), entre une première position prédéterminée et une seconde position prédéterminée en relation angulaire avec la première position, et
un mécanisme de retenue pivotant (16) accouplé entre le caisson de convoyeur et le châssis (50, 52, 68), le mécanisme de retenue pivotant (16) comprenant une première barre (64) et une seconde barre (74),
**caractérisée en ce que** :
la première barre (64) comporte une première partie terminale (66) couplée de façon pivotante au châssis (50, 52, 68) par une première liaison pivotante (70) et la seconde barre comporte une première partie terminale (76) accouplée de façon pivotante au caisson de convoyeur (18) par une seconde liaison pivotante (78),
la première barre (64) et la seconde barre (74) étant reliées de façon pivotante à une troisième liaison pivotante (88), et la première partie terminale (42) du caisson tubulaire de convoyeur (18) incluant une butée (96) disposée à un emplacement déterminé,
le mécanisme de retenue pivotant étant configuré de telle sorte que lorsque le caisson tubulaire de convoyeur (18) est dans la première position, la première barre (64) et la seconde barre (74) seront dans une relation généralement alignée entre la première liaison pivotante (70) et la seconde liaison pivotante (78), une des barres (64, 74) portant sur la butée (96) pour maintenir le caisson tubulaire de convoyeur (18) dans la première position, et lorsque le caisson tubulaire de convoyeur (18) est maintenu dans la première position, la seconde barre (74) peut être pivotée hors de la relation alignée avec la première barre (64) pour dégager le caisson tubulaire de convoyeur (18) afin de pivoter vers la seconde position, et
le mécanisme de retenue pivotant étant configuré en plus de telle sorte que, lorsque le caisson tubulaire (18) est dans la seconde position, la première barre (64) et la seconde barre (74) pivoteront dans une relation de chevauchement pour maintenir le caisson tubulaire de convoyeur (18) dans la seconde position, et lorsque le caisson tubulaire de convoyeur (18) est maintenu dans la seconde position, la seconde barre (74) peut être pivotée à l'extérieur de l'engagement avec la première barre (64) pour libérer le caisson du convoyeur afin de pivoter vers la première position.

2. Machine de récolte agricole selon la revendication 1, **caractérisée en ce que** la première position prédéterminée est une position abaissée prédéterminée et la seconde position prédéterminée est une position levée prédéterminée.

3. Machine de récolte agricole selon l'une quelconque des revendications précédentes, **caractérisée en ce que** la première partie terminale (42) du caisson tubulaire de convoyeur (18) est la partie terminale d'entrée et **en ce que** la seconde partie terminale opposée du caisson du convoyeur est la partie terminale de décharge.

4. Machine de récolte agricole selon l'une quelconque des revendications précédentes, **caractérisée en ce que** le caisson tubulaire du convoyeur (18) contient une vis sans fin hélicoïdale (20).

5. Machine de récolte agricole selon l'une quelconque des revendications précédentes, **caractérisée en ce que** la seconde barre (74) comprend un levier (82) monté de façon rigide sur celle-ci.

6. Machine de récolte agricole selon l'une quelconque des revendications précédentes, **caractérisée en ce que** au moins une des barres (64, 74) a une longueur ajustable.

7. Machine de récolte agricole selon l'une quelconque des revendications précédentes, **caractérisée en ce que** la troisième liaison pivotante (88) comprend une chape et une broche de chape (92).

8. Machine de récolte agricole selon l'une quelconque des revendications précédentes, **caractérisée en ce que** la première barre (64) comprend une courbure (98) qui s'incurve au-dessus d'une partie de la seconde barre (74) lorsque les barres sont dans une relation de chevauchement.

9. Machine de récolte agricole selon l'une quelconque des revendications précédentes, **caractérisée en ce que** le réservoir à grains (14) comprend une région inférieure (34) et une région supérieure (36).

10. Machine de récolte agricole selon l'une quelconque des revendications précédentes, **caractérisée en ce que** la première position prédéterminée du caisson tubulaire de convoyeur (18) est une position entreposée à l'intérieur du réservoir à grains (14) et la seconde position prédéterminée du caisson de convoyeur tubulaire (18) est une position déployée dans le réservoir à grains (14).

11. Procédé pour abaisser et lever un convoyeur d'alimentation de grains (12) dans une machine de récolte agricole selon l'une quelconque des revendications précédentes à partir de la position respective prédéterminée levée et abaissée, **caractérisé en ce qu'**il comprend les étapes consistant à :
pivoter la seconde barre (74) dans une première direction de pivotement hors de l'engagement avec la première barre (64) pour dégager le caisson tubulaire de convoyeur (18) hors de la position levée, et pivoter le caisson de convoyeur (18) vers le bas vers une position abaissée prédéterminée dans laquelle le mécanisme de retenue (16) va automatiquement pivoter dans la première direction de pivotement jusqu'à ce qu'il touche la butée (96) pour maintenir le convoyeur dans cette position abaissée, et
pivoter la seconde barre (74) dans une seconde direction de pivotement, opposée à la première direction de pivotement, pour dégager le caisson tubulaire du convoyeur (18) hors de la position abaissée, et pivoter le caisson du convoyeur (18) vers le haut jusqu'à une position levée prédéterminée dans laquelle le mécanisme de retenue (16) pivotera automatiquement dans la seconde direction de pivotement dans une relation de chevauchement avec la première barre (64) afin de maintenir le convoyeur dans cette position levée.
